# EUROPÄISCHE PATENTSCHRIFT

(11) **EP 2 814 990 B1**
(45) Veröffentlichungstag und Bekanntmachung des Hinweises auf die Patenterteilung: **18.10.2017**
(21) Anmeldenummer: 13703786.7
(22) Anmeldetag: 06.02.2013
(51) Int. Cl.: C21D 9/40, C21D 1/10, C21D 1/42

(54) **VERFAHREN ZUM INDUKTIVEN RANDSCHICHTHÄRTEN EINER RINGFLÄCHE**
METHOD FOR INDUCTION SURFACE HARDENING OF A RING SURFACE
PROCÉDÉ DE TREMPE SUPERFICIELLE PAR INDUCTION D'UNE SURFACE ANNULAIRE

(30) Priorität: 17.02.2012 DE 102012101309
(43) Veröffentlichungstag der Anmeldung: 24.12.2014
(73) Patentinhaber: thyssenkrupp Rothe Erde GmbH, 44137 Dortmund (DE)
(72) Erfinder: BURTCHEN, Marco, 59555 Lippstadt (DE); LANGELS, Mathieu, 59597 Erwitte (DE); STAKEMEIER, Bernd, 59597 Erwitte (DE)
(74) Vertreter: Loock, Jan Pieter
(86) Internationale Anmeldenummer: PCT/EP2013/052346
(87) Internationale Veröffentlichungsnummer: WO 2013/120748

(56) Entgegenhaltungen:
- EP-A2- 1 988 179
- JP-A- 60 116 724

## Beschreibung

Die vorliegende Erfindung betrifft ein Verfahren zum induktiven Randschichthärten einer Ringfläche eines Werkstücks, insbesondere einer Lauffläche eines Lagerrings, wobei die Ringfläche und eine Härteeinrichtung mit einem Induktor in einem Vorschubbetrieb relativ zueinander in einer Bearbeitungsrichtung bewegt werden, wobei dem Induktor in Bearbeitungsrichtung gesehen eine Brause nachgelagert ist, um die Ringfläche ausgehend von einer Anfangszone bis zu einer Endzone mittels des Induktors zu erwärmen und dann durch ein Kühlen mittels der Brause zu härten, wobei zwischen der Anfangszone und der Endzone eine ungehärtete Schlupfzone vorgesehen wird.

Bei dem Härten eines geschlossenen Kurvenzuges in Form einer Ringfläche durch ein lokales Aufwärmen und nachfolgendes Abschrecken besteht das Problem, dass bereits gehärtete Bereiche nicht erneut auf eine Temperatur erwärmt werden dürfen, bei der die Härteeigenschaften wieder verloren gehen. Bei einer Ringfläche wird deshalb zwischen einer Anfangszone, an der mit der Härtung begonnen wird, und einer Endzone, die zuletzt gehärtet wird, eine ungehärtete Schlupfzone vorgesehen, welche beispielsweise eine Breite zwischen 10 mm und 20 mm aufweist. Bei Wälzlagern ist es bekannt, diese Schlupfzone zu hinterschleifen, damit dort die Wälzkörper nicht anliegen. Des Weiteren ist zu berücksichtigen, dass die Anfangs- und die Endzone bezüglich der Einhärtetiefe und der an der Oberfläche vorliegenden Härte einen Übergangsbereich darstellen, weil beide Parameter jeweils in Richtung der Schlupfzone abnehmen. In dem gehärteten Bereich zwischen der Anfangszone und der Endzone werden dagegen durch eine gleichmäßige Bewegung zwischen der Härteeinrichtung und dem Werkstück sowie durch konstante Parameter gleichmäßige Härteeigenschaften erreicht. Neben der Geschwindigkeit zwischen der Härteeinrichtung und der Ringfläche kann das Härteergebnis durch die Leistung und Frequenz des Induktors, die Menge und Temperatur des durch die Brause ausgebrachten Kühlmittels sowie durch die Steuerung einer gegebenenfalls vorgesehenen Vorwärmung eingestellt werden.

Bei den aus der Praxis bekannten Verfahren zum induktiven Randschichthärten mit einem Induktor wird die Härteeinrichtung in der Anfangszone mit dem für die kontinuierliche Härtung vorgesehenen Parametern aktiviert und in der Endzone wieder deaktiviert.

Aus den Druckschriften DE 10 2005 006 701 B3, DE 10 2006 003 014 B1 und DE 10 2008 033 735 A1 sind Verfahren zum induktiven Randschichthärten einer Ringfläche eines Werkstücks bekannt. Bei diesem Verfahren wird eine Schlupfzone dadurch vermieden bzw. reduziert, dass zwei Induktoren eingesetzt werden, die ausgehend von einer Anfangszone gegenläufig bewegt werden. Die Anfangszone kann dabei vollständig gehärtet werden, weil durch beide Induktoren eine gleichmäßige oder zumindest weitgehend gleichmäßige Erwärmung erreicht werden kann. Die beiden Induktoren werden dann entgegengesetzt bewegt und kommen schließlich an der Endzone zusammen, die an der Ringfläche der Anfangszone gegenüberliegt. Auch die Endzone wird nur einmal erwärmt, wenn die beiden Induktoren sich von beiden Seiten annähern. Da die beiden Induktoren nicht beliebig eng aneinander herangebracht werden können, kann die Endzone zunächst mit einem Hilfsinduktor vorgewärmt werden. Nachteilig ist bei den beschriebenen Verfahren, dass insbesondere bei Großwälzlagern ein sehr erheblicher Aufwand hinsichtlich der Härteeinrichtung mit gegenläufigen Induktoren notwendig ist. Aus DE 1 988 179 A2 ist ein Verfahren zum Oberflächenhärten der Lauffläche eines Lagerrings bekannt, wobei zwei aufeinander folgende Induktoren verwendet werden.

Der vorliegenden Erfindung liegt die Aufgabe zugrunde, ein Verfahren mit den eingangs beschriebenen Merkmalen anzugeben, bei dem die Schwächung der

Ringfläche durch die reduzierte Härte in der Anfangs- und der Endzone weniger stark ausgeprägt ist.

Ausgehend von einem Verfahren gemäß dem Oberbegriff des Patentanspruches 1 wird die Aufgabe erfindungsgemäß dadurch gelöst, dass nacheinander ein als Vorwärmer vorgesehener Hilfsinduktor, der als Bestandteil der Härteeinrichtung dem Induktor in Bearbeitungsrichtung vorgelagert ist, mit einem Wechselstrom beaufschlagt wird, während der Induktor und die Brause inaktiv sind; die Härteeinrichtung bei aktivem Hilfsinduktor und inaktivem Induktor sowie inaktiver Brause mit einer ersten Geschwindigkeit relativ gegenüber dem Werkstück bewegt wird; der Induktor bei weiterhin aktivem Hilfsinduktor aber inaktiver Brause durch die Beaufschlagung mit einem Wechselstrom aktiviert und eine zweite Geschwindigkeit eingestellt wird, die Brause bei aktivem Induktor und aktivem Hilfsinduktor aktiviert und eine dritte Geschwindigkeit eingestellt wird; der Hilfsinduktor bei aktivem Induktor und aktiver Brause deaktiviert und eine vierte Geschwindigkeit eingestellt wird und schließlich der Induktor deaktiviert wird.

Die vorliegende Erfindung beruht auf der Erkenntnis, dass bei dem induktiven Randschichthärten mit einem Induktor eine ungehärtete Schlupfzone nicht vermieden werden kann, wobei jedoch durch eine variable Steuerung der Härteparameter wie der Geschwindigkeit, der Leistung sowie der Brausemenge ausgehend von der Schlupfzone ein möglichst schneller Anstieg der Härte sowie der Einhärtetiefe erreicht werden kann. Die Anfangs- und die Endzone, in der sich jeweils die Härteeigenschaften ausgehend von der ungehärteten Schlupfzone bis zu im Wesentlichen konstanten Parametern ändern, können damit so kurz wie möglich gehalten werden. Die Härteparameter werden in der Anfangszone, das heißt also zu Beginn der Härtung, in mehreren Schritten verändert, um einen möglichst starken Anstieg der Härte zu erreichen. Dabei ist zu berücksichtigen, dass die zu härtende Ringfläche zunächst vor Beginn der Härtung Umgebungstemperatur aufweist, weshalb der Wärmeeintrag durch den Hilfsinduktor als Vorwärmer sowie durch den Hauptinduktor zu erhöhen oder die Geschwindigkeit zu reduzieren ist. Zweckmäßigerweise wird ein möglichst steiler Temperaturgradient eingestellt, um über einen möglichst kurzen Weg ausgehend von der Schlupfzone auch einen möglichst steilen Anstieg der Härte bzw. der Einhärtetiefe an der Ringfläche zu erreichen. Auch zum Ende des Härtevorganges werden die Härteparameter in mehreren Schritten verändert, um den resultierenden Wärmeeintrag der Induktoren zunächst möglichst konstant zu halten und auch bezüglich der Schlupfzone einen möglichst steilen Temperaturgradienten zu erreichen.

Erfindungsgemäß werden die Härteparameter über die Zeit verändert, um zu Beginn der Härtung sowie am Ende der Härtung ein optimales Ergebnis des Härtevorgangs zu erreichen. Dazu werden insbesondere die zugeführten Leistungen, die Vortriebsgeschwindigkeit und/oder die Brausemenge zur Kühlung variiert. Die Variation erfolgt in mehreren Schritten, wobei damit im Rahmen der Erfindung auch eine kontinuierliche Veränderung der Härteparameter über ein Zeitintervall oder über den gesamten Härtevorgang umfasst sein soll. Die zuvor definierten Geschwindigkeiten, die jeweils zu Beginn eines neuen Abschnitts eingestellt werden, bilden dann gleichsam Stützstellen eines sich zeitlich kontinuierlich ändernden Verlaufes.

Im Rahmen der Erfindung wird eine Relativbewegung zwischen der Härteeinrichtung und der Ringfläche erzeugt, wobei die Geschwindigkeiten sich auf die Relativgeschwindigkeit zwischen der Härteeinrichtung und der Ringfläche beziehen. So ist es beispielsweise möglich, die Ringfläche des Werkstücks an der feststehenden Härteeinrichtung vorbeizuführen oder auch bei einem ruhenden Werkstück die Härteeinrichtung entlang der zu härtenden Oberfläche zu bewegen. Insbesondere bei Laufflächen eines Großwälzlagers hat sich die erste Variante bewährt, wobei der Lagerring liegend, senkrecht oder schräg angeordnet sein kann und die Bewegung des Lagerrings über abstützende Rollen erfolgt. Die Vorschubrichtung des Lagerrings ist dann der Bearbeitungsrichtung entgegengesetzt, in der sich der Härtungsvorgang bei der Bearbeitung fortsetzt.

Erfindungsgemäß wird zunächst der Vorwärmer aktiviert, um die Ringfläche in der Anfangszone zunächst vorzuwärmen. Da die Ringfläche bezüglich der für die Härtung vorgesehenen Temperatur zunächst kalt ist, können die Härteeinrichtung und die Ringfläche nach der Aktivierung des Hilfsinduktors zunächst ruhen, so dass die Geschwindigkeit gleich Null ist. Alternativ besteht auch die Möglichkeit, unmittelbar nach der Aktivierung des Hilfsinduktors zunächst eine negative Geschwindigkeit einzustellen. Es erfolgt dann eine Relativbewegung zwischen der Ringfläche und der Härteeinrichtung, die der Bewegung während des kontinuierlichen Härtevorgangs entgegengesetzt ist. So kann der Hilfsinduktor wie auch der Induktor aus einer Leiterschleife mit zwei parallelen Leitern gebildet sein. Um dann einen möglichst steilen Temperaturgradienten zu erzeugen, kann eine Rückwärtsbewegung zwischen der Ringfläche und der Härteeinrichtung erfolgen, wobei der Weg dieser Rückwärtsbewegung dem halben Abstand zwischen den beiden parallelen Leitern entspricht.

Nach einer ersten Vorwärmung der Ringfläche in der Anfangszone wird die Ringfläche weitergedreht, bis der ganz am Anfang vorgewärmte Abschnitt unterhalb des Induktors liegt. Die an diesem ersten Abschnitt anschließenden Bereiche der Ringfläche werden dabei durch die weitere Bewegung mit der ersten Geschwindigkeit ebenfalls vorgewärmt. Sodann wird der Induktor durch die Beaufschlagung mit Wechselstrom aktiviert, um den zuvor vorgewärmten Bereich der Ringfläche auf die für die Härtung vorgesehene Temperatur zu bringen. Der nach der Aktivierung des Hilfsinduktors und vor der Aktivierung des Induktors zurückgelegte Weg entspricht zweckmäßigerweise dem Abstand dieser beiden Einrichtungen. Die bei dem Aktivieren des Induktors eingestellte zweite Geschwindigkeit kann grundsätzlich gleich der ersten Geschwindigkeit sein. Vorzugsweise wird jedoch eine höhere Geschwindigkeit eingestellt, um der bereits erfolgten Erwärmung und der insgesamt erhöhten zugeführten Leistung Rechnung zu tragen.

Um schließlich die mit dem Induktor aufgewärmte Ringfläche abzuschrecken und dadurch zu härten, wird die dem Induktor in Bewegungsrichtung nachgelagerte Brause mit einer Verzögerung aktiviert. Grundsätzlich liegt es auch im Rahmen der Erfindung die Brausemenge, das heißt die der Brause zugeführte Menge an Kühlflüssigkeit, zwischen dem Beginn der Härtung und der Endhärtung bedarfsgerecht zu variieren.

Mit dem Aktivieren der Brause wird eine dritte Geschwindigkeit eingestellt, die aber vorzugsweise gleich der zweiten Geschwindigkeit ist.

Nach der Aktivierung der Brause stellen sich für die Härtung im Wesentlichen konstante Bedingungen ein, mit denen der größte Teil der Ringfläche, beispielsweise zumindest 80 % der Ringfläche, gehärtet werden. Im Zuge der Einstellung nahezu konstanter Werte kann auch noch eine weitere, optimale Geschwindigkeit für die Härtung unter konstanten Bedingungen gewählt werden, wobei eine solche fünfte Geschwindigkeit vorzugsweise größer als die dritte Geschwindigkeit ist.

Zusätzlich oder alternativ zu der Veränderung der Geschwindigkeiten kann auch die Leistung des Induktors bzw. des Hilfsinduktors verändert werden, wobei vorzugsweise die Leistung in einem an dessen jeweilige Aktivierung anschließenden Intervall gegenüber einem nachfolgenden Intervall erhöht ist. Eine solche zeitweise Erhöhung der Leistung zu Beginn trägt dem Umstand Rechnung, dass bezüglich der Temperaturverteilung noch keine konstanten Bedingungen vorliegen.

Auch im Bereich der Endzone ist eine Variation der Härteparameter in mehreren Schritten vorgesehen. So wird zunächst der in Bearbeitungsrichtung vorgelagerte Hilfsinduktor deaktiviert, um eine unerwünschte Erwärmung im Bereich der Schlupfzone zu vermeiden. Wie zuvor erläutert, wird auch in der Endzone ein möglichst steiler Temperaturgradient erzeugt, um einen entsprechend steilen Übergang zwischen den gehärteten und den ungehärteten Bereichen zu ermöglichen. Bei der Deaktivierung des Hilfsinduktors wird eine vierte Geschwindigkeit eingestellt, die vorzugsweise gegenüber der zuvor beschriebenen fünften Geschwindigkeit reduziert ist und beispielsweise der dritten Geschwindigkeit entsprechen kann. Diese Reduzierung der Geschwindigkeit bezüglich dem im Wesentlichen kontinuierlichen Härtungsvorgang trägt dem Umstand Rechnung, dass die wieder erkaltete Schlupfzone eine Temperatursenke darstellt, wobei auch der weggefallene Wärmeeintrag durch den Hilfsinduktor in einem gewissen Maße zu kompensieren ist. Um die Erwärmung durch den Induktor selbst zu erhöhen, kann zusätzlich oder alternativ auch die Leistung des Induktors erhöht werden. Wie bereits zuvor erläutert, können auch beide Maßnahmen, nämlich eine Anpassung der zugeführten Leistung sowie eine Veränderung der Geschwindigkeit, über den gesamten Härtevorgang in geeigneter Weise kombiniert werden.

Schließlich wird auch der Induktor deaktiviert, wobei auch hier der zwischen der Deaktivierung des Hilfsinduktors und des Induktors zurückgelegte Weg in etwa dem Abstand zwischen Hilfsinduktor und Induktor entspricht. Die Brause bleibt zunächst aktiv, um den zuletzt durch den Induktor aufgewärmten Bereich der Endzone abschrecken zu können. Nach der Deaktivierung der Brause kann das Werkstück mit der gehärteten Ringfläche von der Härteeinrichtung entfernt werden.

Im Rahmen der vorliegenden Erfindung bezieht sich die Unterscheidung zwischen Induktor und Hilfsinduktor auf die unterschiedliche Funktion dieser beiden Einrichtungen, nämlich das Vorwärmen und das Aufwärmen auf die Härtetemperatur. Der Induktor und der Hilfsinduktor können in ihrer Ausgestaltung ähnlich oder sogar gleich sein. Geeignet ist beispielsweise eine Leiterschleife mit zwei zueinander parallelen Leitern, die über einen Schenkel verbunden sind. Eine solche Leiterschleife wird an einen Wechselstromgenerator angeschlossen, der z. B. mit einer Frequenz zwischen 3 kHz und 8 kHz betrieben wird. Aufgrund des zur Erwärmung notwendigen Ströme kann die Leiterschleife auch hohl und von einem Kühlmedium durchströmt sein.

Um insbesondere bei großen Werkstücken, beispielsweise einem Lagerring eines Großwälzlagers, eine präzise Steuerung zu ermöglichen, kann ein Referenzpunkt für die Steuerung der Härteeinrichtung durch eine Markierung auf der Ringfläche und einem der Härteeinrichtung zugeordneten Sensor bestimmt werden. Etwaige Maßabweichungen der Werkstücke, Ungenauigkeiten bei dem Antrieb des Werkstücks bzw. der Härteeinrichtung sowie unterschiedliche thermische Ausdehnungen können dadurch keinen negativen Einfluss auf den Härteprozess haben.

Die Erfindung wird im Folgenden anhand einer lediglich ein Ausführungsbeispiel darstellenden Zeichnung erläutert. Es zeigen:
- **Fig. 1**: der Bereich einer ringförmigen Lauffläche, in dem ein Härtevorgang zum induktiven Randschichthärten begonnen und beendet wird, wobei zwischen einer Anfangszone und einer Endzone eine ungehärtete Schlupfzone verbleibt,
- **Fig. 2**: eine Vorrichtung zum induktiven Randschichthärten,
- **Fig. 3**: eine beispielhafte Darstellung der zeitlichen Änderung verschiedener Härteparameter,
- **Fig. 4a bis 4c**: schematische Darstellungen der Temperaturverteilungen zu verschiedenen Zeitpunkten bei Härtebeginn.

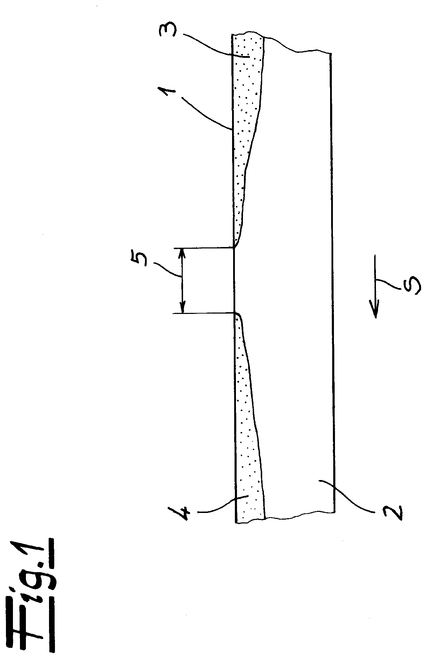

Fig. 1 zeigt exemplarisch den Bereich einer Ringfläche 1 eines Werkstücks 2, beispielsweise einer Lauffläche eines Lagerrings, wobei zwischen einer Anfangszone 3, in der mit der induktiven Randschichthärtung begonnen wurde, und einer Endzone 4, in der die induktive Randschichthärtung beendet wurde, eine Schlupfzone 5 verbleibt, die ungehärtet ist. Es ist angedeutet, dass in der Anfangszone 3 und der Endzone 4 die Einhärtetiefe und die Härte jeweils in Richtung der Schlupfzone 5 abnehmen.

Die Schlupfzone 5 stellt bezüglich der Ringfläche 1 eine Schwächung dar und kann beispielsweise hinterschliffen werden, damit Wälzkörper dort lokal nicht anliegen. Darüber hinaus ist aber auch erkennbar, dass die Randschichthärte und die Einhärttiefe auch im Bereich der Anfangszone 3 und der Endzone 4 reduziert sind und ausgehend von der ungehärteten Schlupfzone 5 jeweils kontinuierlich ansteigen. Insgesamt werden verbesserte Eigenschaften der Ringfläche erreicht, wenn nicht nur die Schlupfzone 5 möglichst kurz ist, sondern auch die Einhärtetiefe und die Randschichthärte ausgehend von der Schlupfzone 5 innerhalb der Anfangszone 3 und der Endzone 4 möglichst schnell auf einen ansonsten um den Umfang nahezu konstanten Wert ansteigen.

Um dies zu erreichen, sieht die vorliegende Erfindung eine gezielte Einstellung der Härteparameter in mehreren Schritten zu Beginn und zum Ende der Härtung vor.

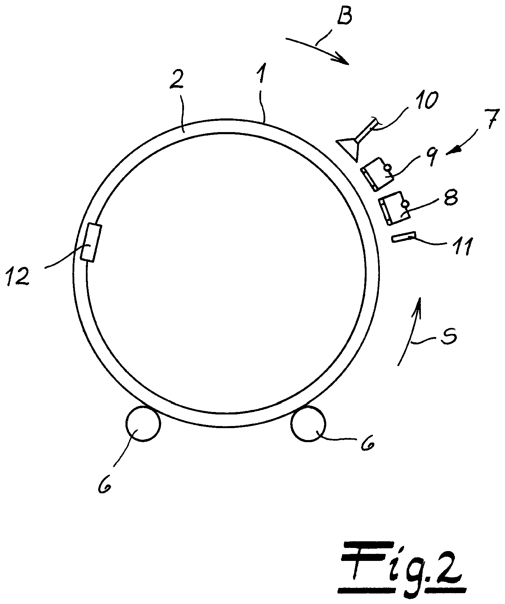

Die Fig. 2 zeigt eine Vorrichtung zum induktiven Randschichthärten, wobei das Werkstück 2 vertikal ausgerichtet ist und auf Rollen 6 abgestützt ist. Mittels der angetriebenen Rollen 6 kann die außen liegende Ringfläche 1 des Werkstücks 2 gegenüber einer feststehenden Härteeinrichtung 7 bewegt werden, wobei die Bearbeitungsrichtung B, in der sich die Härtung fortsetzt, der Vorschubrichtung S des Werkstücks 2 entgegengesetzt ist.

Die Härteeinrichtung 7 umfasst in Vorschubrichtung S gesehen hintereinander einen Hilfsinduktor 8 als Vorwärmer, einen Induktor 9 und eine Brause 10. In dem dargestellten Ausführungsbeispiel umfasst die Härteeinrichtung 7 auch einen optionalen Sensor 11, um eine an dem Werkstück 2 angebrachte Markierung 12 zu erkennen und so den Härtevorgang zu steuern.

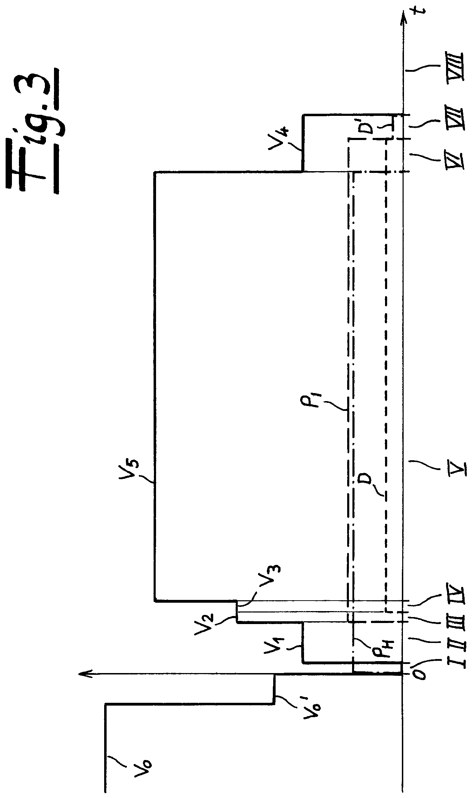

Die Fig. 3 zeigt exemplarisch die zeitliche Änderung verschiedener Härteparameter während des Härtevorgangs. Dargestellt sind die Geschwindigkeit v zwischen der Härteeinrichtung 7 und der Ringfläche 1, die dem Hilfsinduktor 8 in Form von Wechselstrom zugeführte Leistung P_{H}, die dem Induktor in Form von Wechselstrom zugeführte Leistung Pₗ sowie der Durchfluss D des der Brause 10 zugeführten Kühlmittels.

Zunächst wird das Werkstück 2 mit einer hohen Geschwindigkeit v₀ gedreht, bis die Markierung 12 von dem Sensor 11 erfasst wird. Das Werkstück 2 wird sodann noch mit einer reduzierten Geschwindigkeit v₀' weitergedreht, bis zu Beginn eines ersten Abschnittes I der als Vorwärmer vorgesehene Hilfsinduktor 8 aktiviert und mit der Leistung P_{H} beaufschlagt wird. In diesem ersten Abschnitt I ruht das Werkstück 2.

In dem anschließenden zweiten Abschnitt II ist weiterhin lediglich der Hilfsinduktor 8 aktiv, wobei die Ringfläche 1 in dem zweiten Abschnitt II entsprechend dem Abstand zwischen dem Hilfsinduktor 8 und dem Induktor 9 mit einer ersten Geschwindigkeit v₁ bewegt wird.

Zu Beginn eines dritten Abschnittes III wird dann der Induktor 9 aktiviert und mit einer Leistung Pₗ beaufschlagt, wobei gleichzeitig eine erhöhte zweite Vorschubgeschwindigkeit v₂ eingestellt wird.

In einem weiteren Abschnitt IV wird dann die zuvor inaktive Brause 10 mit einem vorgegebenen Durchfluss D an Kühlmittel beaufschlagt. Erst durch die Kühlung der zuvor mit dem Hilfsinduktor 8 und dem Induktor 9 aufgewärmten Ringfläche 1 erfolgt eine Materialumwandlung und damit eine Randschichthärtung. Mit der Aktivierung der Brause wird eine dritte Geschwindigkeit v₃ eingestellt, die jedoch gleich der zweiten Geschwindigkeit v₂ ist. Nach der stufenweisen Aktivierung des Hilfsinduktors 8, des Induktors 9 und der Brause 10 stellen sich in etwa konstante Bedingungen ein, wobei aber in einem weiteren fünften Abschnitt eine erhöhte fünfte Vorschubgeschwindigkeit v₅ eingestellt wird. Während dieses fünften Abschnittes V wird der größte Teil der Ringfläche 1 unter praktisch konstanten Bedingungen gehärtet.

Auch bei der Beendung des Härtevorganges sind mehrere Schritte vorgesehen. So wird zunächst zu Beginn eines sechsten Abschnitts VI der Hilfsinduktor 8 deaktiviert. Gleichzeitig wird eine vierte Geschwindigkeit v₄ eingestellt, die in dem Ausführungsbeispiel der ersten Geschwindigkeit v₁ entspricht. Durch die Reduzierung der Geschwindigkeit wird dem Umstand Rechnung getragen, dass nun eine Erwärmung der Ringfläche 1 nur noch durch den Induktor 9 und nicht mehr durch den Hilfsinduktor 8 erfolgen kann, weshalb der geringere Energieeintrag durch einen entsprechend reduzierten Vorschub ausgeglichen wird.

Schließlich wird zu Beginn eines siebten Abschnitts VII auch der Induktor 9 deaktiviert. Die Brause 10 bleibt dabei zunächst mit einem reduzierten Durchfluss D' aktiv, um den zuletzt erwärmten Bereich der Ringfläche 1 in der Endzone 4 abzukühlen. Zu Beginn eines achten Abschnitts VIII wird schließlich auch die Brause 10 komplett deaktiviert, so dass der Härtevorgang vollständig beendet ist.

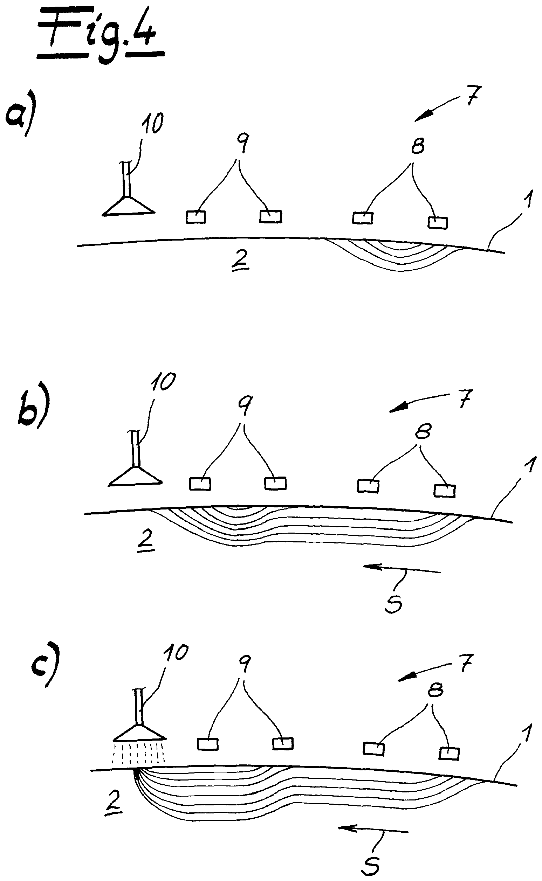

Die Fig. 4a bis 4c zeigen exemplarisch die Temperaturverteilung an der Härteeinrichtung während des ersten Abschnitts I, zu Beginn des dritten Abschnitts II sowie während des fünften Abschnittes V. Der Temperaturverlauf ist dabei durch Äquipotentiallinien (Linien gleicher Temperatur) angedeutet.

Gemäß der Fig. 4a bewirkt der Hilfsinduktor 8 als Vorwärmer eine lokale Erwärmung, wobei das Werkstück 2 während des ersten Abschnittes I noch ruht. Während des zweiten Abschnittes II wird dann das Werkstück 2 in Vorschubrichtung S bewegt, wodurch der zuvor unter dem Hilfsinduktor 8 vorgewärmte Bereich unterhalb des Induktors 9 liegt. Erst dann wird der Induktor 9 zu Beginn des dritten Abschnitts III aktiviert, um eine für die Randschichthärtung ausreichende Temperatur zu erreichen (Fig. 4b).

Fig. 4c zeigt schließlich das Vorschubhärten in dem fünften Abschnitt V unter praktisch konstanten Bedingungen, wobei die an der Härteeinrichtung 7 vorbeigeführte Ringfläche 1 durch den Hilfsinduktor 8 kontinuierlich vorgewärmt, durch den Induktor 9 auf die notwendige Temperatur für die Randschichthärtung gebracht und schließlich durch die Brause 10 abgeschreckt wird.

## Patentansprüche

1. Verfahren zum induktiven Randschichthärten einer Ringfläche (1) eines Werkstücks (2), insbesondere einer Lauffläche eines Lagerringes, wobei die Ringfläche (1) und eine Härteeinrichtung (7) mit einem Induktor (9) in einem Vorschubbetrieb relativ zueinander in einer Bearbeitungsrichtung (B) bewegt werden, wobei dem Induktor (9) in Bearbeitungsrichtung (B) gesehen eine Brause (10) nachgelagert ist, um die Ringfläche (1) ausgehend von einer Anfangszone (3) bis zu einer Endzone (4) mittels des Induktors (9) zu erwärmen und dann durch ein Kühlen mittels der Brause (10) zu härten, wobei zwischen der Anfangszone (3) und der Endzone (4) eine ungehärtete Schlupfzone (5) vorgesehen wird, wobei nacheinander
a) ein als Vorwärmer vorgesehener Hilfsinduktor (8), der als Bestandteil der Härteeinrichtung (7) dem Induktor (9) in Bearbeitungsrichtung (B) vorgelagert ist, mit einem Wechselstrom beaufschlagt wird, während der Induktor (9) und die Brause (10) inaktiv sind;
b) die Härteeinrichtung (7) bei aktivem Hilfsinduktor (8) und inaktivem Induktor (9) sowie inaktiver Brause (10) mit einer ersten Geschwindigkeit (v₁) in Bearbeitungsrichtung (B) relativ gegenüber dem Werkstück (2) bewegt wird,
**dadurch gekennzeichnet, dass**:
c) der Induktor (9) bei weiterhin aktivem Hilfsinduktor (8) aber inaktiver Brause (10) durch die Beaufschlagung mit einem Wechselstrom aktiviert und eine zweite Geschwindigkeit (v₂) eingestellt wird,
d) die Brause (10) bei aktivem Induktor (9) und aktivem Hilfsinduktor (8) aktiviert und eine dritte Geschwindigkeit (v₃) eingestellt wird;
e) der Hilfsinduktor (8) bei aktivem Induktor (9) und aktiver Brause (10) deaktiviert und eine vierte Geschwindigkeit (v₄) eingestellt wird;
f) der Induktor (9) deaktiviert wird.

2. Verfahren nach Anspruch 1, **dadurch gekennzeichnet, dass** die Härteeinrichtung (7) und die Ringfläche (1) unmittelbar nach der Aktivierung des Hilfsinduktors (8) ruhen.

3. Verfahren nach Anspruch 1, **dadurch gekennzeichnet, dass** unmittelbar nach der Aktivierung des Hilfsinduktors (8) eine negative Geschwindigkeit eingestellt wird.

4. Verfahren nach Anspruch einem der Ansprüche 1 bis 3, **dadurch gekennzeichnet, dass** die zweite Geschwindigkeit (v₂) größer als die erste Geschwindigkeit (v₁) ist.

5. Verfahren nach einem der Ansprüche 1 bis 4, **dadurch gekennzeichnet, dass** die zweite Geschwindigkeit (v₂) und die dritte Geschwindigkeit (v₃) gleich sind.

6. Verfahren nach einem der Ansprüche 1 bis 5, **dadurch gekennzeichnet, dass** nach dem Aktivieren der Brause (10) und vor dem Deaktivieren des Hilfsinduktors (8) eine fünfte Geschwindigkeit (v₅) eingestellt wird, die größer ist als die dritte Geschwindigkeit (v₃) und die vierte Geschwindigkeit (v₄).

7. Verfahren nach einem der Ansprüche 1 bis 6, **dadurch gekennzeichnet, dass** die Leistung des Induktors (9) verändert wird, wobei die Leistung in einem an dessen Aktivierung anschließenden Intervall gegenüber einem nachfolgenden Intervall erhöht ist.

8. Verfahren nach einem der Ansprüche 1 bis 7, **dadurch gekennzeichnet, dass** die Leistung des Hilfsinduktors (8) verändert wird, wobei die Leistung in einem an dessen Aktivierung anschließenden Intervall gegenüber einem nachfolgenden Intervall erhöht ist.

9. Verfahren nach einem der Ansprüche 1 bis 8, **dadurch gekennzeichnet, dass** ein Referenzpunkt für die Steuerung der Härteeinrichtung (7) durch eine Markierung (12) auf der Ringfläche (1) und einem der Härteeinrichtung (7) zugeordneten Sensor (11) bestimmt wird.

## Claims

1. Method for induction surface hardening of a ring surface (1) of a workpiece (2), particularly a running surface of a bearing ring, the ring surface (1) and a hardening device (7) with an inductor (9) being moved relative to one another in a direction of treatment (B) in a feeding mode, a spray (10) being located downstream of the inductor (9), as seen in the direction of treatment (B), in order to heat the ring surface (1) from an initial zone (3) to an end zone (4) by means of the inductor (9) and then harden it by cooling by means of the spray (10), an unhardened slip zone (5) being provided between the initial zone (3) and the end zone (4), wherein, in succession,
a) a supplementary inductor (8), which is intended as a preheater and is arranged upstream of the inductor (9) in the direction of treatment (B) as a component part of the hardening device (7), is subjected to an alternating current while the inductor (9) and the spray (10) are inactive;
b) with the supplementary inductor (8) active and the inductor (9) inactive and also the spray (10) inactive, the hardening device (7) is moved in relation to the workpiece (2) at a first speed (v₁) in the direction of treatment (B), **characterized in that**:
c) with the supplementary inductor (8) still active but the spray (10) inactive, the inductor (9) is activated by being subjected to an alternating current and a second speed (v₂) is set;
d) with the inductor (9) active and the supplementary inductor (8) active, the spray (10) is activated and a third speed (v₃) is set;
e) with the inductor (9) active and the spray (10) active, the supplementary inductor (8) is deactivated and a fourth speed (v₄) is set;
f) the inductor (9) is deactivated.

2. Method according to Claim 1, **characterized in that** the hardening device (7) and the ring surface (1) remain at rest directly after the activation of the supplementary inductor (8).

3. Method according to Claim 1, **characterized in that** a negative speed is set directly after the activation of the supplementary inductor (8).

4. Method according to Claim one of Claims 1 to 3, **characterized in that** the second speed (v₂) is greater than the first speed (v₁).

5. Method according to one of Claims 1 to 4, **characterized in that** the second speed (v₂) is equal to the third speed (v₃) .

6. Method according to one of Claims 1 to 5, **characterized in that** a fifth speed (v₅), which is greater than the third speed (v₃) and the fourth speed (v₄), is set after the activation of the spray (10) and before the deactivation of the supplementary inductor (8).

7. Method according to one of Claims 1 to 6, **characterized in that** the power output of the inductor (9) is changed, the power output being increased in an interval following the activation thereof as compared with an interval following thereafter.

8. Method according to one of Claims 1 to 7, **characterized in that** the power output of the supplementary inductor (8) is changed, the power output being increased in an interval following the activation thereof as compared with an interval following thereafter.

9. Method according to one of Claims 1 to 8, **characterized in that** a reference point for controlling the hardening device (7) is determined by a marking (12) on the ring surface (1) and a sensor (11) assigned to the hardening device (7).

## Revendications

1. Procédé de trempe superficielle par induction d'une surface annulaire (1) d'une pièce usinée (2), en particulier d'une surface de roulement d'une bague de support, dans lequel la surface annulaire (1) et un dispositif de trempe (7) avec un inducteur (9) sont déplacés l'un par rapport à l'autre dans une direction d'usinage (B) dans un mode avance, dans lequel une douche (10) est installée en aval de l'inducteur (9) dans la direction d'usinage (B), pour chauffer la surface annulaire (1) à partir d'une zone de départ (3) jusqu'à une zone finale (4) au moyen de l'inducteur (9) et ensuite tremper celle-ci par refroidissement avec la douche (10), une zone de glissement non trempée (5) étant prévue entre la zone de départ (3) et la zone finale (4), dans lequel, dans l'ordre ci-dessous,
a) un inducteur auxiliaire (8) prévu en tant que moyen de préchauffage, lequel est installé en tant que composant du dispositif de trempe (7) en amont de l'inducteur (9) dans la direction d'usinage (B), est sollicité avec un courant alternatif, tandis que l'inducteur (9) et la douche (10) sont inactifs ;
b) le dispositif de trempe (7) sont déplacés par rapport à la pièce usinée (2) dans la direction d'usinage (B) à une première vitesse (v₁) tandis que l'inducteur auxiliaire (8) est actif et l'inducteur (9) inactif, la douche (10) étant également inactive,
**caractérisé en ce que**
c) l'inducteur (9) est activé par sollicitation avec un courant alternatif et une deuxième vitesse (v₂) est réglée tandis que l'inducteur auxiliaire (8) reste actif, la douche (10) étant cependant inactive,
d) la douche (10) est activée et une troisième vitesse (v₃) est réglée tandis que l'inducteur (9) est actif et l'inducteur auxiliaire (8) est activé ;
e) l'inducteur auxiliaire (8) est désactivé et une quatrième vitesse (v₄) est réglée tandis que l'inducteur (9) est actif et la douche (10) est active ;
f) l'inducteur (9) est désactivé.

2. Procédé selon la revendication 1, **caractérisé en ce que** le dispositif de trempe (7) et la surface annulaire (1) sont au repos immédiatement après activation de l'inducteur auxiliaire (8).

3. Procédé selon la revendication 1, **caractérisé en ce qu'**une vitesse négative est réglée immédiatement après activation de l'inducteur auxiliaire (8).

4. Procédé selon la revendication l'une des revendications 1 à 3, **caractérisé en ce que** la deuxième vitesse (v₂) est supérieure à la première vitesse (v₁).

5. Procédé selon l'une des revendications 1 à 4, **caractérisé en ce que** la deuxième vitesse (v₂) et la troisième vitesse (v₃) sont identiques.

6. Procédé selon l'une des revendications 1 à 5, **caractérisé en ce qu'**une cinquième vitesse (v₅), laquelle est supérieure à la troisième vitesse (v₃) et à la quatrième vitesse (v₄), est réglée après activation de la douche (10) et avant désactivation de l'inducteur auxiliaire (8).

7. Procédé selon l'une des revendications 1 à 6, **caractérisé en ce que** la puissance de l'inducteur (9) est modifiée, la puissance étant augmentée au cours d'un intervalle suivant l'activation de celui-ci, par rapport à un intervalle consécutif.

8. Procédé selon l'une des revendications 1 à 7, **caractérisé en ce que** la puissance de l'inducteur auxiliaire (8) est modifiée, la puissance étant augmentée au cours d'un intervalle suivant l'activation de celui-ci, par rapport à un intervalle consécutif.

9. Procédé selon l'une des revendications 1 à 8, **caractérisé en ce que** le point de référence pour la commande du dispositif de trempe (7) est déterminé par un marquage (12) sur la surface annulaire (1) et par un capteur (11) attribué au dispositif de trempe (7).
